(19) Europäisches Patentamt / European Patent Office / Office européen des brevets

(11) **EP 2 317 665 B1**

(12) **EUROPEAN PATENT SPECIFICATION**

(45) Date of publication and mention
of the grant of the patent:
**08.01.2014 Bulletin 2014/02**

(51) Int Cl.:
*H04B 7/04* $^{(2006.01)}$      *H04B 7/08* $^{(2006.01)}$
*H04L 25/02* $^{(2006.01)}$

(21) Application number: **09013585.6**

(22) Date of filing: **28.10.2009**

(54) **Technique for transmitted streams combining weight determination in a receiver of a SIMO or MIMO system**

Technik zur Bestimmung von Kombinationsgewichtungen in einem Empfänger eines SIMO/MIMO System

Technique pour combiner la détermination du poids dans un récepteur dans un système SIMO/MIMO

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**04.05.2011 Bulletin 2011/18**

(73) Proprietor: **Telefonaktiebolaget LM Ericsson (publ)**
**164 83 Stockholm (SE)**

(72) Inventor: **Zuerbes, Stefan**
**90562 Heroldsberg (DE)**

(74) Representative: **Röthinger, Rainer**
**Wuesthoff & Wuesthoff**
**Patent- und Rechtsanwälte**
**Schweigerstrasse 2**
**81541 München (DE)**

(56) References cited:
**EP-A1- 2 075 969**     **US-A1- 2007 076 805**

- **ANAHID ROBERT ET AL: "Report on the implementation and performance of advanced sub-blocks" INTERNET CITATION 1 April 2007 (2007-04-01), pages 1-14, XP002486278 Retrieved from the Internet: URL:http://www.wisquas.org/Public/publicat ions/WISQUAS_D4_3.pdf> [retrieved on 2008-06-30]**
- **PENKETH J ET AL: "Performance and implementation complexity of receiver algorithms for MIMO-OFDM based wireless LAN systems" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 2, 5 September 2004 (2004-09-05), pages 1522-1526, XP010754081 ISBN: 978-0-7803-8523-8**

**Description**

**Technical Field**

The present disclosure relates to digital data transmissions. In particular, the disclosure relates to digital data reception with multi-channel contributions, such as single-input-multiple-output (SIMO) systems including rake receivers, and multiple-input-multiple-output (MIMO) systems including mobile terminals for spatial multiplexing scenarios.

**Background**

Signal propagation via different paths can significantly degrade data reception due to destructive interference known as multi-path fading. On the other hand, controlled multi-path transmissions, for example in MIMO system, provide significantly higher data rates as compared to SISO systems by virtue of the additional spatial dimensions available for the transmission. Exemplary networks for spatial-multiplexing transmissions include the Global System for Mobile communications (GSM), the Universal Mobile Telecommunications System (UMTS), and the Long Term Evolution (LTE) proposed by the 3rd Generation Partnership Project (3GPP).

A radio link from one of the one or more transmit antennas to one of the one or more receive antennas is denoted a channel. Efficient spatial multiplexing requires an estimate of channel coefficients and a computation of corresponding combining weights and gains at the receiver side. For a transmission involving P transmit antennas and N receive antennas, the channel estimate is represented by a channel estimate matrix of dimensionality N x P. Each element of the channel estimate matrix represents a transfer function of the corresponding channel.

When determining the channel estimate matrix, it is conventional to minimize the mean square error of the channel estimator, which is referred to as a minimum mean square error (MMSE) channel estimator. Conventional MMSE computation methods are disclosed in document US 2005/0069023 A1 for a rake receiver circuit and described in some detail in document IEEE Transactions on Wireless Communications, Vol. 4, pp. 593 to 602. The conventional computation method requires the computation of an inverse matrix (cf. equation 6 in the first document and equation 16 in the latter document). Computing the inverse of a matrix requires at least one division by the determinant of the matrix to be inverted. Under realistic conditions the determinant can become small, resulting in a severe degradation of the numerical computation of combining weights, or can even lead to undefined numerical values resulting in a loss of data or a link interruption.

Document US 2007/0076805 A1 describes a multi-carrier receiver and a method for generating soft-bits in a MIMO system. Assuming spatially uncorrelated and equal noise across all receiver antennas, equations for training parameters depending on the average energy of the noise are presented.

Closely related documents EP 2 075 969 A1 and report D4.3 of the project "WiSQUAS" of CELTIC Telecommunication Solutions disclose a method of equalizing symbols based on maximization of a likelihood criterion, the criterion involving the adjoint of a matrix.

Research article entitled "Performance and implementation complexity of receiver algorithms for MIMO-OFDM based wireless LAN systems" by J. Penketh et al., Personal, Indoor and Mobile Radio Communications, 15th IEEE International Symposium, 2004, Vol. 2, pp. 1522 to 1526, suggests a linear equalizer based on Cramer's Rule by directly computing the inverse of a channel gain matrix dividing the adjugate matrix by its determinant.

As an explicit example, we consider the conventional computation of combining weights and gains in mobile communication systems such as LTE. In a spatial-multiplexing mode of LTE, a rank-two transmission is defined by two (or four) transmit antennas and two codewords per sub-frame. The computation of combining weights and gains is based on an effective channel estimate matrix

$$G = \left(g_{n,q}\right) = \begin{pmatrix} g_{11} & g_{12} \\ g_{21} & g_{22} \end{pmatrix}$$

and variance estimates $\sigma_n^2$. The index n = 1, 2 enumerates the receive antennas and the index q = 1, 2 identifies the codeword.

The conventional computation of combining weights and gains consistent with an MMSE requires computing and inverting a square matrix $E = E(G,\Sigma)$. The combining weights and gains are then derived from a combining weight matrix

$$B = E^{-1} \cdot G = \left(b_{n,q}\right) = \begin{pmatrix} b_{11} & b_{12} \\ b_{21} & b_{22} \end{pmatrix}$$

according to the equation

$$w^{(n,q)} = \frac{b_{n,q}^{\bullet}}{1 - b_q^H \cdot g_q}$$

for the combining weight coefficients $w^{(n,q)}$, and according to the equation

$$a^{(q)} = \frac{b_q^H \cdot g_q}{1 - b_q^H \cdot g_q}$$

for the gain coefficients $a^{(q)}$ with column vectors

$$b_q = \begin{pmatrix} b_{1q} \\ b_{1q} \end{pmatrix} \text{ and } g_q = \begin{pmatrix} g_{1q} \\ g_{2q} \end{pmatrix}.$$

It thus becomes apparent that the conventional implementation for the computation of combining weight coefficients and gain coefficients requires two different steps of numerical divisions. First, in the computation of the combining weight matrix B, a step of dividing by the determinant of E is required for the computation of the inverse of E. Second, the coefficients $w^{(n,q)}$ and $a^{(q)}$ each require a second step of dividing by a denominator $1 - b_q^H \cdot g_q$, which becomes small in the case of small noise variances, i.e. the better a signal-to-noise ratio condition, the worse is a numerical quality of the essential combining weights and gains.

Furthermore, the denominators comprise differences that are significantly smaller than their constituents, resulting in a poor numerical accuracy due to the limited numerical resolution of floating point number representation. Dividing by such an inaccurate denominator amplifies the inaccuracies for the resulting coefficients and can even cause numerical instabilities.

Summary

There is a demand for a technique improving speed, accuracy and numerical stability of computations for spatial multiplexing.

This demand is satisfied by a method of determining combining weight coefficients and gain coefficients for combining channels of a multi-channel transmission based on a channel estimate matrix representative of the multi-channel transmission according to claim 1. The method comprises the steps of providing a square matrix, deriving an adjugate of the square matrix, and determining combining weight coefficients. The square matrix has a quadratic dependence on the channel estimate matrix. The combining weight coefficients are determined as a function of the channel estimate matrix and the adjugate matrix.

Any "dependence" on, or determination "as a function of", a quantity or signal is not to be construed as requiring a step of storing, sending, signaling, interfacing, or calling a routine/function of the quantity or signal. The wording encompasses replacing the "function" by substitution of the "dependence" as well as established methods of code- and/or layout-optimization.

According to the technique presented herein, the determinant of the square matrix can be obviated, particularly the first division by the determinant of the square matrix can be obviated. In the absence of the division step, computational complexity can be reduced, numerical accuracy can be increased, and numerical stability can be ensured even for small eigenvalues of the square matrix.

The method may further comprise the step of determining gain coefficients as a function of the channel estimate matrix and a determinant of the square matrix. This step allows for a simultaneous or separate determination of gain coefficients, wherein the computation of the gain coefficients also benefits from the elimination of the first division step.

Explicitly, the square matrix equals

$$E = G\ G^H + \mathrm{diag}(\sigma_1{}^2, \sigma_2{}^2),$$

wherein $G\ G^H$ is the quadratic dependence on the channel estimate matrix and diagonal elements $\sigma_n{}^2$ of the second term represent a noise variance estimate of an n-th receive path (receive antenna, n = 1, 2). The method may thus account for various sources of noise in the multi-channel transmission.

Furthermore, the step of determining the combining weight coefficients can comprise determining an intermediate weight matrix as a product of the adjugate matrix and the channel estimate matrix, wherein the intermediate weight matrix represents the dependence of the combining weight matrix on the adjugate matrix. The intermediate weight matrix, or one or more coefficients thereof, can be repeatedly used in at least one of the steps of determining combining weight coefficients and determining gain coefficients. This further reduces computational complexity.

The multi-channel transmission may involve a plurality of transmit streams (codewords), each transmit stream corresponding to one column of the channel estimate matrix and one column of the intermediate weight matrix. Furthermore, for one or more of the transmit streams, the combining weight coefficient and/or the gain coefficient may be a function of the corresponding one column of the channel estimate matrix and the corresponding one column of the intermediate weight matrix. Representing the transmit streams by (individual) columns of the channel estimate matrix and the intermediate weight matrix allows a rapid implementation including collision-free simultaneous access to parameters (represented by column vector elements) of the transmit streams. For one or all (active) transmit streams, the combining weight coefficients and/or gain coefficients can thus be determined by a machine-optimized code, or specific hardware, implementing a vector or parallel computation.

The multi-channel transmission can be a rank-two transmission and the intermediate weight matrix can equal

$$C = A \cdot G = \begin{pmatrix} e_{22}g_{11} - e_{12}g_{21} & e_{22}g_{12} - e_{12}g_{22} \\ e_{11}g_{21} - e_{12}^{*}g_{11} & e_{11}g_{22} - e_{12}^{*}g_{12} \end{pmatrix} = \begin{pmatrix} c_{11} & c_{12} \\ c_{21} & c_{22} \end{pmatrix},$$

with elements (coefficients) denoted by lower case letters of corresponding matrices. For a rapid computation of matrix elements of the intermediate weight matrix, the elements can be directly encoded or represented by hardware, further including explicitly elements of the square matrix mentioned above. The computation of the intermediate weight matrix can thus be based directly on input signals (such as the channel estimate matrix and the noise variance estimate) further reducing memory requirements.

The combining weight coefficients of a q-th transmit stream may equal

$$w^{(q)} = \frac{c_q^{*}}{d_q},$$

wherein $w^{(q)}$ and $c_q$ denote column vectors, with q = 1, 2 and wherein

$$d_1 = |g_{12}|^2 \sigma_2{}^2 + |g_{22}|^2 \sigma_1{}^2 + \sigma_1{}^2 \sigma_2{}^2,$$

and

4

$$d_2 = |g_{11}|^2 \sigma_2^2 + |g_{21}|^2 \sigma_1^2 + \sigma_1^2 \sigma_2^2 .$$

This approach may obviate problems associated with the second division including the low accuracy due to the conventional summation of equal-magnitude terms with opposite signs in the denominator $d_q$ as well as numerical instabilities due to a small (or even negative) denominator dq. All terms in the disclosed computation approach (according to the denominators dq above) are strictly non-negative and the denominator dq is positive under realistic conditions (due to the presence of noise $\sigma_n^2$).

Moreover, the gain coefficients of a q-th transmit stream may equal

$$a^{(q)} = \frac{\det E}{d_q} - 1 .$$

This allows for a computation of the gain coefficient, wherein the computation also benefits from the improved accuracy and numerical stability due to the strictly non-negative representation technique and computation method of the denominator $d_q$. Furthermore, the denominators dq can be determined in a common computation step followed by an independent, subsequent or simultaneous (parallel) computation of the combining weight coefficients and gain coefficients.

According to another aspect, the demand is also satisfied by a computer program product. The computer program product comprises program code portions for performing one or more of the steps of one or more of the techniques described herein, when the computer program product is executed on one or more computing devices. The computer program product may be stored on a computer-readable recording medium, such as a permanent or re-writable memory including flash memory, a CD-ROM, or a DVD. The computer program product may also be provided for download via one or more computer networks, such as the Internet, a mobile telecommunication network, or a wireless or wired Local Area Network (LAN).

According to a further aspect, the demand is also satisfied by a device for determining combining weight coefficients and gain coefficients for combining channels of a multi-channel transmission based on a channel estimate matrix representative of the multi-channel transmission according to claim 7. The device comprises a memory unit and a processor. The memory unit is adapted to at least temporarily store data representative of a square matrix having a quadratic dependence on the channel estimate matrix. The processor is adapted to derive an adjugate matrix of the square matrix and to determine combining weight coefficients as a function of the channel estimate matrix and the adjugate matrix.

The processor may further be adapted to determine gain coefficients as a function of the channel estimate matrix and a determinant of the square matrix. The processor may still further be adapted to determine an intermediate weight matrix as a product of the adjugate matrix and the channel estimate matrix. In the combining weight determination, the processor can access the intermediate weight matrix representing the dependence of the combining weight coefficients on the adjugate matrix. According to a still further aspect, the demand is also satisfied by a user terminal comprising the device for determining combining weight coefficients.

**Brief Description of the Drawing**

In the following, the technique presented herein is described in more detail with reference to exemplary embodiments illustrated in the drawings, wherein

Fig. 1    schematically illustrates an embodiment of a physical layer for handling a downlink in a mobile terminal device;

Fig. 2    schematically illustrates a frequency-time grid of Orthogonal Frequency-Division Multiplexing (OFDM);

Fig. 3    schematically illustrates a conventional embodiment of a combining weight computation device;

Fig. 4    is a schematic flowchart illustrating a method embodiment reducing computational complexity;

Fig. 5    schematically illustrates an illustrative example of a combining weight computation device operative to perform the method embodiment of Fig. 4;

Fig. 6    schematically illustrates a first embodiment of a combining weight computation device optimized for two receive antennas; and

Fig. 7    schematically illustrates further illustrative example of a combining weight computation device for an arbitrary number of receive antennas.

## Detailed Description

In the following description, for purposes of explanation and not limitation, specific details are set forth, such as specific device configurations and specific downlink scenarios, in order to provide a thorough understanding of the techniques disclosed herein. It will be apparent to one skilled in the art, that the techniques may be practised in other embodiments that depart from these specific details. Moreover, while the following embodiments will primarily be described in relation to the Long Term Evolution (LTE) standard, it will be readily apparent that the techniques described herein can also be implemented using other standards, formats and transport protocols, including the Universal Mobile Telecommunications System (UMTS) and Global Systems for Mobile communications (GSM) or Enhanced Data Rates for GSM Evolution (EDGE). Furthermore, the embodiments may be applied to stationary or mobile terminal devices, including mobile phones, wireless handheld devices, handheld game consoles, and notebooks.

Those skilled in the art will further appreciate that the methods, steps and functions explained herein may be implemented using individual hardware circuitry, using software functioning in conjunction with a programmed microcontroller/microprocessor or a general purpose computer, using an Application Specific Integrated Circuit (ASIC) and/or using one or more Digital Signal Processors (DSPs). It will also be appreciated that, while the following embodiments are primarily described in the form of methods, components, and devices, the technique disclosed herein may also be embodied in a computer processor and a memory coupled to the processor, wherein the memory stores one or more programs that perform the steps discussed herein when executed by the processor.

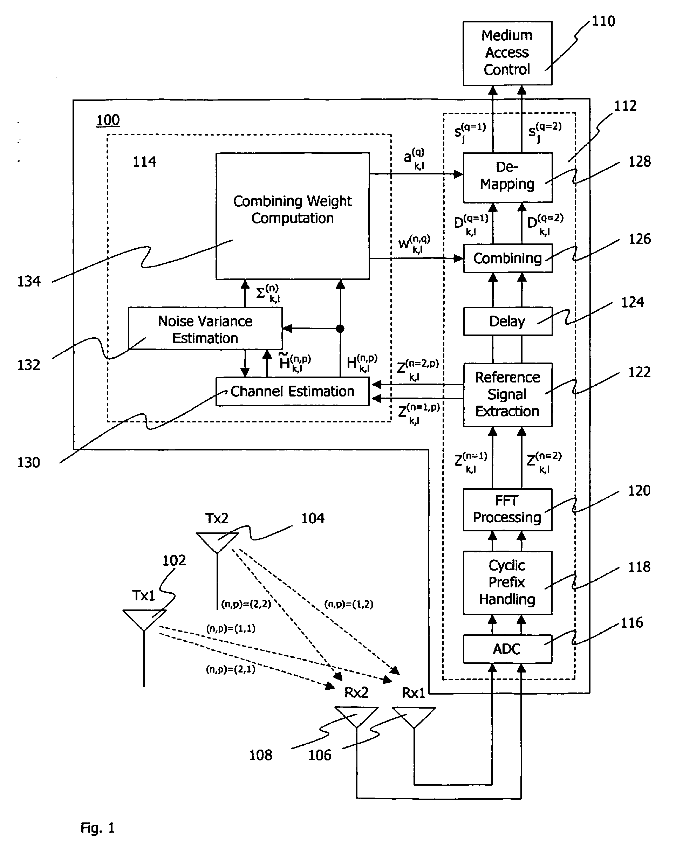

Reference is now made to Fig. 1, which shows an embodiment of a receive stage 100 representing a physical layer of a downlink in a mobile terminal device according to the LTE standard. The receive stage 100 is capable of receiving analog radio frequency signals from two transmit antennas Tx1 102, Tx2 104 at receive antennas Rx1 106, Rx2 108. The receive stage 100 is further capable of simultaneously receiving signals from more than P=2 transmit antennas 102, 104. LTE also allows for P=4 transmit antennas, and embodiments including more than N=2 receive antennas 106, 108 are discussed below.

On a transmitter side (not shown) in a spatial-multiplexing mode, an encoder generates a codeword which is physically mapped by a modulation mapper to a complex-valued modulation amplitude $a_{k,l}$ (also denoted downlink resource element) associated with an OFDM symbol indicated by an index l and a plurality of sub-carriers indicated by a Fast Fourier Transformation (FFT) index k. In a rank-two transmission of the spatial-multiplexing mode, there are two codewords (Q = 2) which are pre-coded by a unitary precoding matrix $W=(w_1, w_2)$, wherein the column vectors $w_q$ correspond to precoding vectors for the codewords q=1 and q=2, respectively. Of course, generalizations to non-unitary precoding matrices W are readily possible. The receiver stage 100 processes the analog radio frequency signal of the receive antennas 106, 108 and outputs digital data streams $s^{(q)}$ corresponding to the codewords q=1, 2 to a Medium Access Control (MAC) unit 110. To this end, the receiver stage 100 comprises a signal processing line 112 and a channel analysis branch 114.

The signal processing line 112 comprises an Analog to Digital Converter (ADC) 116 with an Automatic Gain Control (AGC) to make best use of available ADC resolution. One OFDM symbol comprises in the time domain a cyclic prefix of 4.7 $\mu$s (or 5.2 $\mu$s) allowing for compensation of delay spread or intersymbol interference. A cyclic prefix handling unit 118 positions an FFT window for an FFT processing unit 120 by applying a cyclic shift. After time synchronization is established and the cyclic prefix is handled, a complex time-domain data vector of length $N_{FFT}$ is obtained. This vector is transformed into the frequency domain by the FFT processing unit 120 providing received amplitudes $Z^{(n)}_{k,l}$ for each sub-carrier k (ranging from k=0 to $N_{FFT}$-1) and for each of the receive antennas 106, 108 indicated by n=1, 2. The index l indicates a temporal sequence of OFDM symbols.

At predetermined sub-carrier positions k reference signals are extracted by a reference signal extraction unit 122 from the OFDM symbols carrying reference signal resource elements at symbol times l. While the extracted reference signals $Z_{k,l}^{(n,p)}$ are provided to the channel analysis branch 114, the full OFDM symbol (including the extracted reference signal elements) are delayed by a delay unit 124 for synchronization with output of the channel analysis branch 114.

As output signals, the channel analysis branch 114 provides combining weight coefficients $w_{k,l}^{(n,q)}$ and gain coefficients $a_{k,l}^{(q)}$ to a combining unit 126 and a demapping unit 128, respectively. The combining unit 126 weights the OFDM amplitudes $Z_{k,l}^{(n)}$ by multiplication with the appropriate combining weight coefficient $w_{k,l}^{(n,q)}$ and sums over the receive antennas 106, 108 according to the index n = 1, ..., N (N = 2) yielding output symbols $D_{k,l}^{(q)}$ for each of the codewords q = 1, ..., Q (here assuming Q = 2). The output symbols $D_{k,l}^{(q)}$ are fed into the demapping unit 128 for a quantization of soft-bits $s_j^{(q)}$ as follows:

For QPSK $(a_0 = 1/\sqrt{2})$, , 16QAM $(a_0 = 1/\sqrt{10})$, and 64QAM $(a_0 = 1/\sqrt{42})$:

$s_{k,l,0}^{(q)} = a_0 \, \text{Re}(D_{k,l}^{(q)})$ and
$s_{k,l,1}^{(q)} = a_0 \, \text{Im}(D_{k,l}^{(q)})$.

Furthermore for 16QAM ($a_1^2 = 2/10$) and 64QAM ($a_1^2 = 4/42$):

$s_{k,l,2}^{(q)} = K_1 \, (a_{k,l}^{(q)} \, a_1^2 - | \, s_{k,l,0}^{(q)} \, |)$ and
$s_{k,l,3}^{(q)} = K_1 \, (a_{k,l}^{(q)} \, a_1^2 - |s_{k,l,1}^{(q)} \, |)$.

Still furthermore for 64QAM ($a_2^2 = 2/42$):

$s_{k,l,4}^{(q)} = K_2(a_{k,l}^{(q)} \, a_2^2 - |s_{k,l,2}^{(q)} \, |)$ and
$s_{k,l,5}^{(q)} = K_2(a_{k,l}^{(q)} \, a_2^2 - |s_{k,l,3}^{(q)} \, |)$.

Constants $K_1$ and $K_2$ are chosen to approximate a log-likelihood ratio. The gain coefficients $a_{k,l}^{(q)}$ enter the quantization for a Quadrature Amplitude Modulation (QAM). The signal processing line 112 provides bit streams grouped according to physical channels (including a physical broadcast channel and a physical downlink shared channel) to the Medium Access Control unit 110.

The channel analysis branch 114 comprises a channel estimation unit 130, a noise variance estimation unit 132, and a combining weight computation unit 134. The extracted reference signals $Z_{k,l}^{(n,p)}$ are received by the channel estimation unit 130. A coarse channel estimation is performed by the channel estimation unit 130 based on the extracted reference signal

$$Z_{k,l}^{(n,p(k,l))} = \sum_{p=1}^{P} \sum_{q=1}^{Q} H_{k,l}^{(n,p)} \, W^{(p,q)} \, a_{k,l}^{(q)} + v_{k,l}^{(n)}$$

by exploiting the knowledge of the modulation amplitudes $a_{k,l}^{(q)}$ transmitted on the reference signal sub-carriers at specific reference positions in time (l) and frequency (k). The coarse channel estimation $\tilde{H}_{k,l}^{(n,p)}$ is computed by multiplying received amplitudes $Z_{k,l}^{(n,p)}$ with the complex conjugate of the unit-magnitude reference signal sub-carrier amplitude $a_{k,l}^{(q)}$:

$$\tilde{H}_{k,l}^{(n,p)} = Z_{k,l}^{(n,p)} \, a_{k,l}^{(q)*}.$$

The coarse channel estimates $\tilde{H}_{k,l}^{(n,p)}$ are instantaneous and unfiltered estimates at the predetermined reference signal positions k, l. Since the coarse channel estimation does not compensate for noise and interference signal $v_{k,l}^{(n)}$, the coarse channel estimates $\tilde{H}_{k,l}^{(n,p)}$ are a noisy snapshots of a transfer function between transmit antenna denoted by p and receive antenna denoted by n at the sub-carrier position k and time l of the frequency-time grid.

The channel estimation unit 130 provides the coarse channel estimate $\tilde{H}_{k,l}^{(n,p)}$ to the noise variance estimation unit 132, which estimates a noise variance (with *E* denoting an expectation value)

$$\Sigma_{k,l}{}^{(n)} = E\left[\upsilon_{k,l}{}^{(n)}\ \upsilon_{k,l}{}^{(n)*}\right] = \sigma^2{}_n$$

assuming white Gaussian noise independent for each receive antenna 106, 108 represented by the index n.

The noise variance $\Sigma_{k,l}{}^{(n)}$ estimated by the noise variance estimate unit 132 is a sum of distortion variances caused by

- thermal noise, component noise, quantization noise;
- phase noise;
- a channel estimation error variance;
- an interference variance from multiple neighboring cells and from other scheduled mobile terminal devices; and
- residual intersymbol interference after removal of the cyclic prefix.

The channel estimation unit 130 filters the coarse channel estimation $\tilde{H}_{k,l}^{(n,p)}$, corrects for the noise variance $\Sigma_{k,l}{}^{(n)}$, and interpolates over the full frequency-time grid (including positions k,l of the grid between the reference signal positions), which results in a channel estimation matrix $H_{k,l}{}^{(n,p)}$. The channel estimation matrix $H_{k,l}{}^{(n,p)}$ and the noise variance $\Sigma_{k,l}{}^{(n)}$ are signaled to the combining weight computation unit 134, which derives the combining weight coefficients $w_{k,l}{}^{(n,q)}$ and the gain coefficients $a_{k,l}{}^{(q)}$.

The accuracy of these coefficients is essential for the separation of the output signals $D_{k,l}{}^{(q)}$ according to the codewords in the combining unit 126 and for the quality of the soft-bit quantization performed by the demapping unit 128. For this reason, the combining weight computation unit 134 is an important unit of the receive stage 100 and is the central object for improvement in what follows.

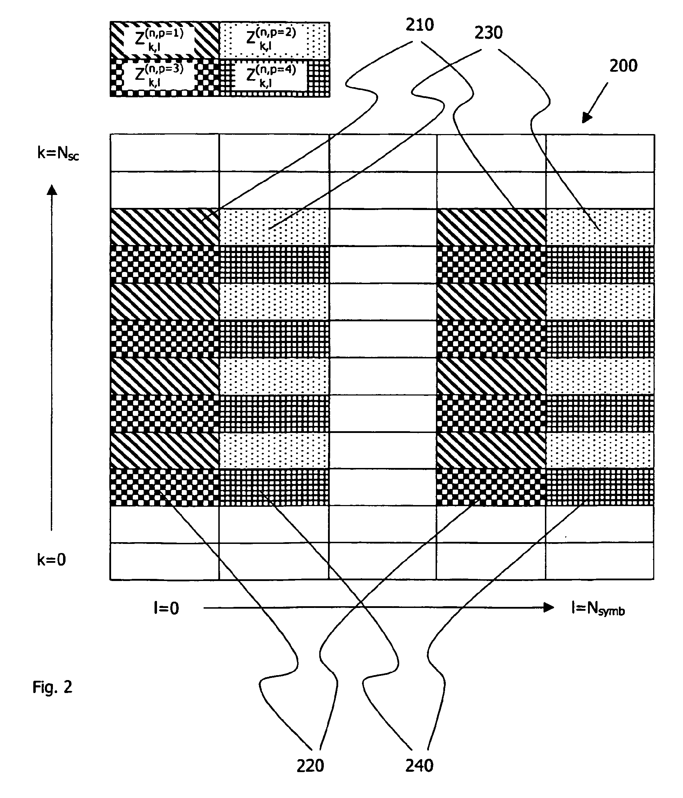

Fig. 2 is a simplified sketch of the time-frequency grid with subsequent OFDM symbols numerated in temporal order by $l = 0, ..., N_{symb}-1$ on sub-carriers $k = 0, ..., N_{sc}-1$. In the simplified illustration of Fig. 2 one downlink time slot of 0.5 ms duration is shown. A radio frame of 10 ms duration comprises 20 time slots. A realistic time-frequency grid size for one time slot has $N_{symb} = 7$ and $N_{sc} = 1200$ modulation amplitudes.

The Reference Signal Extraction unit 122 applies a first reference signal grid 210 in OFDM symbol l=0 to extract the reference signals $Z_{k,l}{}^{(n,p=1)}$ (marked by a diagonal hatching in Fig. 2) of the transmit antenna port p=1 denoted by $K_{RSIG}{}^{(p=1)}$. A second reference signal grid 220 is used in OFDM symbol l=0 for the reference signal $Z_{k,l}{}^{(n,p=3)}$ of the transmit antenna port p=3 denoted by $K_{RSIG}{}^{(p=3)}$. The time slot 200 shown in Fig. 2 applies to a MIMO transmission involving four transmit antenna denoted by p = 1, ..., 4. The first and second reference grid 210, 220 are also used in OFDM symbol l=1 to extract the reference signals corresponding to the antenna ports p=2 and p=4, respectively, as is shown with reference signs 230 and 240. Reference signal extraction is repeated at later OFDM symbols l to allow for interpolation in the time direction.

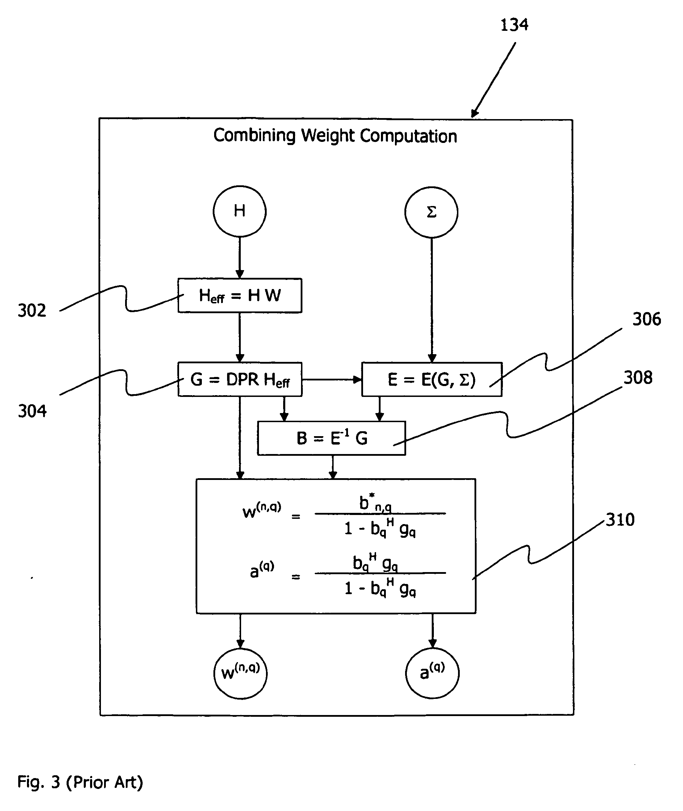

Fig. 3 schematically illustrates a functionality of a conventional combining weight computation unit 134 based on the input signals of channel estimation $H^{(n,p)}$ and noise variance $\Sigma^{(n)}$, wherein the lower indices k,l are suppressed for a convenient notation. Furthermore, a channel estimate matrix H with matrix elements $H^{(n,p)}$ and a column vector $\Sigma$ with vector elements $\Sigma^{(n)}$ are used for a lucent notation in what follows. It is understood by one of skill that this notation is chosen for the clarity of the explanation, while an implementation in hardware or as executable code can realize the disclosed functionality also without an (explicit) matrix representation or vector representation.

Multiplication with the precoding matrix W by component 302 results in an effective channel estimate $H_{eff} = H\ W$, which is a matrix of dimensionality N x Q, wherein Q=2 is the number of codewords transmitted. In the case of P=4 transmit antennas and N=2 receive antennas, each of the two codewords is multiplexed on two transmit antennas according to the precoding matrix W of dimensionality P x Q = 4 x 2 multiplied with the channel estimate matrix H of dimensionality 2 x 4.

In component 304, the effective channel estimate is scaled by a Data-to-Pilot amplitude Ratio (DPR) representative of a ratio between data amplitudes in OFDM symbols without reference signals and the reference signal amplitude, yielding a scaled effective channel estimate matrix $G=DPR\ H_{eff}$.

As described in the introduction, the conventional combining weight computation derives a square matrix E by component 306 and a combining weight matrix B (also denoted biased combining weight matrix) by component 308, which involves a first division by a determinant of the square matrix E. In component 310, the combining weight coefficients $w^{(n,q)}$ and the gain coefficients $a^{(q)}$ follow from elements of the scaled effective channel estimate matrix G and the combining weight matrix B defined as fractions, which denominators have poor numerical accuracy due to alternating signs in terms of the denominator. Furthermore, the denominator can become arbitrarily small for low noise conditions $\Sigma$. Therefore, the coefficients $w^{(n,q)}$ and $a^{(q)}$ resulting from the conventional combining weight computation are pivotal for the rank-two spatial-multiplexing transmission and the subsequent demapping, but have insufficient numerical quality.

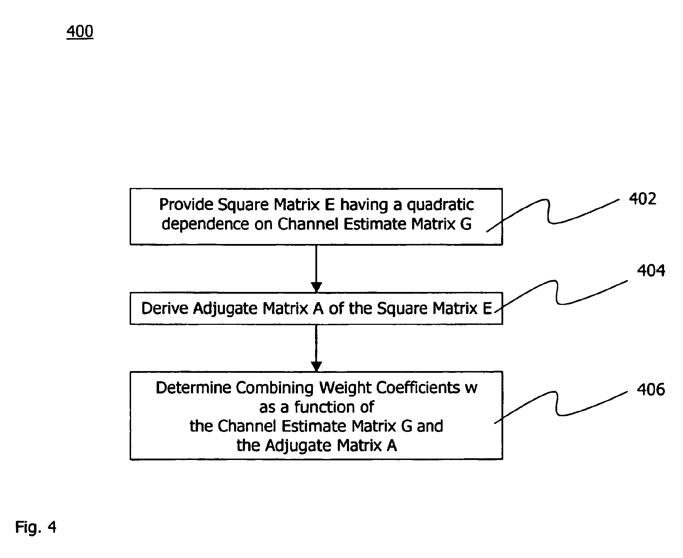

Fig. 4 illustrates a method embodiment 400, which overcomes the deficiencies of the conventional combining weight computation described with reference to Fig. 3. In a first step 402, a square matrix E having a quadratic dependence, $G\,G^H$, on a channel estimate matrix G is provided. The square matrix reads

$$E = GG^H + \begin{pmatrix} \sigma_1^2 & 0 \\ 0 & \sigma_2^2 \end{pmatrix} = \begin{pmatrix} |g_{11}|^2 + |g_{12}|^2 + \sigma_1^2 & g_{11}g_{21}^{\cdot} + g_{12}g_{22}^{\cdot} \\ g_{11}^{\cdot}g_{21} + g_{12}^{\cdot}g_{22} & |g_{21}|^2 + |g_{22}|^2 + \sigma_2^2 \end{pmatrix} = \begin{pmatrix} e_{11} & e_{12} \\ e_{12}^{\cdot} & e_{22} \end{pmatrix}$$

for N=2 and, generally, has dimensionality N x N independent of a number Q of codewords and independent of a number P of transmit antennas due to the quadratic form $G\,G^H$.

An adjugate matrix A of the square matrix E is derived in step 404. The derivation of the adjugate matrix is an algebraic operation, which does not require a division step. Combining weight coefficients $w^{(n,q)}$ are determined as a function of the channel estimate matrix G and the adjugate matrix A. The method embodiment eliminates the first division step of the conventional determination device and thus overcomes all aforementioned technical problems caused by the conventional first division step.

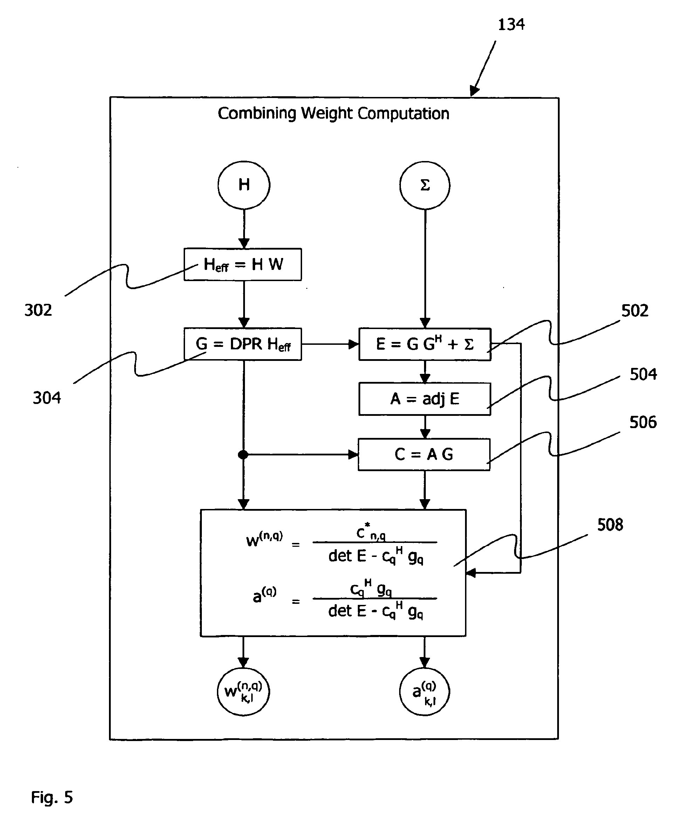

Fig. 5 shows an illustrative example of a combining weight computation unit 134 operative for performing the improved method embodiment of Fig. 4. In the absence of a Data-to-Pilot Ratio (DPR) correction component 304, the square matrix E can be directly computed based on the effective channel estimate matrix $H_{eff}$. Furthermore, in the case of transparent precoding or a unitary precoding matrix W, i.e. $W\,W^H = 1$, the square matrix E can be directly computed based on the channel estimate H by component 306. Moreover, computation time and storage requirements are reduced by omitting one half of off-diagonal elements by virtue of the hermiticity of E, i.e. $E=E^H$.

Component 504 derives the adjugate matrix A of the square matrix E, e.g., by computing the minors of the square matrix E (for arbitrary dimensionality N x N). Alternatively, computation speed is gained at run-time by directly encoding (for one or more different dimensionalities) matrix elements of the adjugate matrix A. In the most relevant case of N=2, the derivation of A is a fast (re-)assignment of E:

$$A = \begin{pmatrix} e_{22} & -e_{12} \\ -e_{12}^{\cdot} & e_{11} \end{pmatrix}.$$

Component 506 computes an intermediate weight matrix C as a matrix product of the adjugate matrix A and the (scaled) effective channel estimate matrix G:

$$C = A \cdot G = \begin{pmatrix} e_{22}g_{11} - e_{12}g_{21} & e_{22}g_{12} - e_{12}g_{22} \\ e_{11}g_{21} - e_{12}^{\cdot}g_{11} & e_{11}g_{22} - e_{12}^{\cdot}g_{12} \end{pmatrix} = \begin{pmatrix} c_{11} & c_{12} \\ c_{21} & c_{22} \end{pmatrix}.$$

For further improvement of the computation speed, the components 504 and 506 or the components 502, 504, and 506 can be directly combined for a given dimensionality in the embodiment computing the matrix elements $c_{n,q}$ of the intermediate weight matrix C as a function of the input values, i.e. at least one of the channel estimate H, the effective channel estimate $H_{eff}$, and the scaled effective channel estimate G as well as the noise variance estimate $\Sigma$.

Component 508 computes the coefficients $w^{(n,q)}$ and $a^{(q)}$ as a function of the intermediate weight matrix C and the determinant of the square matrix E.

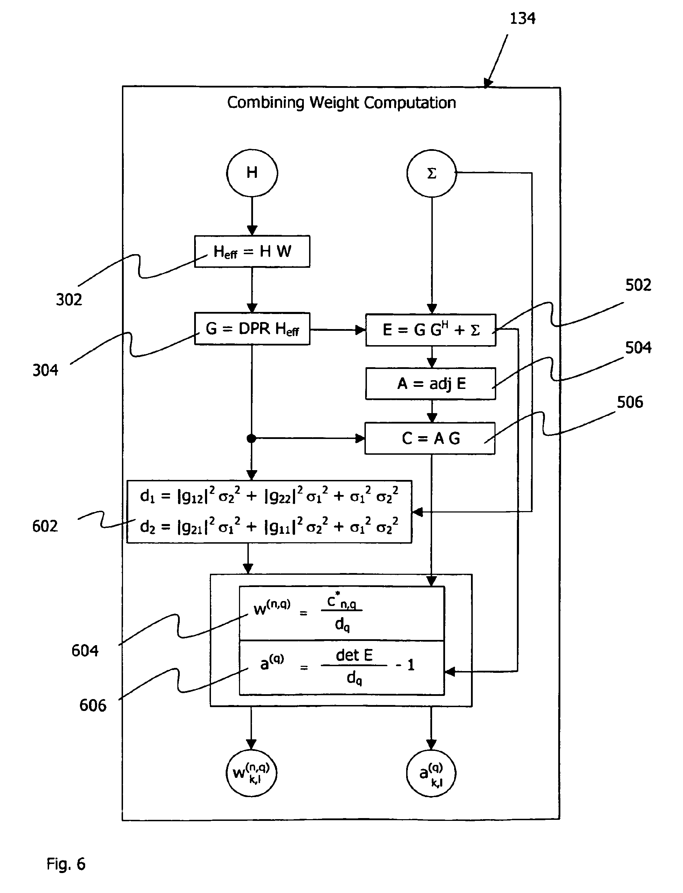

While the illustrative example described with reference to Fig. 5 has completely eliminated the first division already resulting in an improved numerical efficiency, Fig. 6 shows a further improved first embodiment of a combining weight computation unit 134 for the most relevant case of two codewords q = 1,2 and two receive antennas n = 1,2 as shown in Fig. 1. While the components 302, 304, 502, 504, and 506 correspond to those of the illustrative example shown in Fig. 5, component 602 derives the denominators $d_q$ (q=1,2) from a significant numerical improvement of the computation exploiting that the diagonal elements $e_{11}$ and $e_{22}$ of the square matrix E are real. For the codeword q = 1, the denominator of the illustrative example is transformed as follows:

$$d_1 = \det E - c_1^H \cdot g_1 = e_{11}e_{22} - e_{12}e_{12}^* - \left(e_{22}g_{11}^* - e_{12}^*g_{21}^*\right)\cdot g_{11} - \left(e_{11}g_{21}^* - e_{12}g_{11}^*\right)\cdot g_{21}$$

$$= e_{11}e_{22} - e_{12}e_{12}^* - e_{22}\left|g_{11}\right|^2 - e_{11}\left|g_{21}\right|^2 + e_{12}^*g_{21}^*g_{11} + e_{12}g_{11}^*g_{21}$$

$$= e_{11}e_{22} - \left(g_{11}g_{21}^* + g_{12}g_{22}^*\right)\cdot\left(g_{11}^*g_{21} + g_{12}^*g_{22}\right) - e_{22}\left|g_{11}\right|^2 - e_{11}\left|g_{21}\right|^2$$
$$+ \left(g_{11}^*g_{21} + g_{12}^*g_{22}\right)g_{21}^*g_{11} + \left(g_{11}g_{21}^* + g_{12}g_{22}^*\right)g_{11}^*g_{21}$$

$$= e_{11}e_{22} - e_{22}\left|g_{11}\right|^2 - e_{11}\left|g_{21}\right|^2 + \left|g_{11}\right|^2\cdot\left|g_{21}\right|^2 - \left|g_{12}\right|^2\cdot\left|g_{22}\right|^2$$

$$= \left(\left|g_{11}\right|^2 + \left|g_{12}\right|^2 + \sigma_1^2\right)\cdot\left(\left|g_{21}\right|^2 + \left|g_{22}\right|^2 + \sigma_2^2\right)$$
$$- \left(\left|g_{21}\right|^2 + \left|g_{22}\right|^2 + \sigma_2^2\right)\left|g_{11}\right|^2 - \left(\left|g_{11}\right|^2 + \left|g_{12}\right|^2 + \sigma_1^2\right)\left|g_{21}\right|^2 + \left|g_{11}\right|^2\cdot\left|g_{21}\right|^2 - \left|g_{12}\right|^2\cdot\left|g_{22}\right|^2$$

$$= \left|g_{12}\right|^2\cdot\sigma_2^2 + \left|g_{22}\right|^2\cdot\sigma_1^2 + \sigma_1^2\cdot\sigma_2^2$$

The last line above is a representation of the denominator $d_1$, i.e. a computation instruction, according to an embodiment. The computation instruction of $d_1$ comprises only a sum of real and non-negative numbers, which facilitates a hardware representation and provides perfect numerical stability of floating point operations. For the codeword q = 2, a similar transformation yields a computation instruction of $d_2$:

$$d_2 = \det E - c_2^H \cdot g_2 = \left|g_{21}\right|^2\cdot\sigma_1^2 + \left|g_{11}\right|^2\cdot\sigma_2^2 + \sigma_1^2\cdot\sigma_2^2.$$

The computation of the combining weight coefficient $w^{(n,q)}$ by component 508 is thus further improved by component 604 applying (representations of) the positive denominators dq. The computation of the gain coefficient $a^{(q)}$ is also improved by a computation instruction

$$a^{(q)} = \frac{c_q^H \cdot g_q}{d_q}.$$

The latter improved computation component of the gain coefficient $a^{(q)}$ already benefits from the increased numerical stability and accuracy due to the positive denominator dq. The computational efficiency is still further improved as follows:

$$a^{(q)} = \frac{c_q^H \cdot g_q}{\det E - c_q^H \cdot g_q} = \frac{c_q^H \cdot g_q - \det E + \det E}{\det E - c_q^H \cdot g_q} = \frac{\det E - d_q}{d_q} = \frac{\det E}{d_q} - 1.$$

The latter further improved computation instruction 606 for $a^{(q)}$ obviates a matrix product computation step in the numerator in favour of the determinant, det E. The computation instruction thus shares for all codewords q = 1, ..., Q the same numerator, which saves Q-1 re-computation steps.

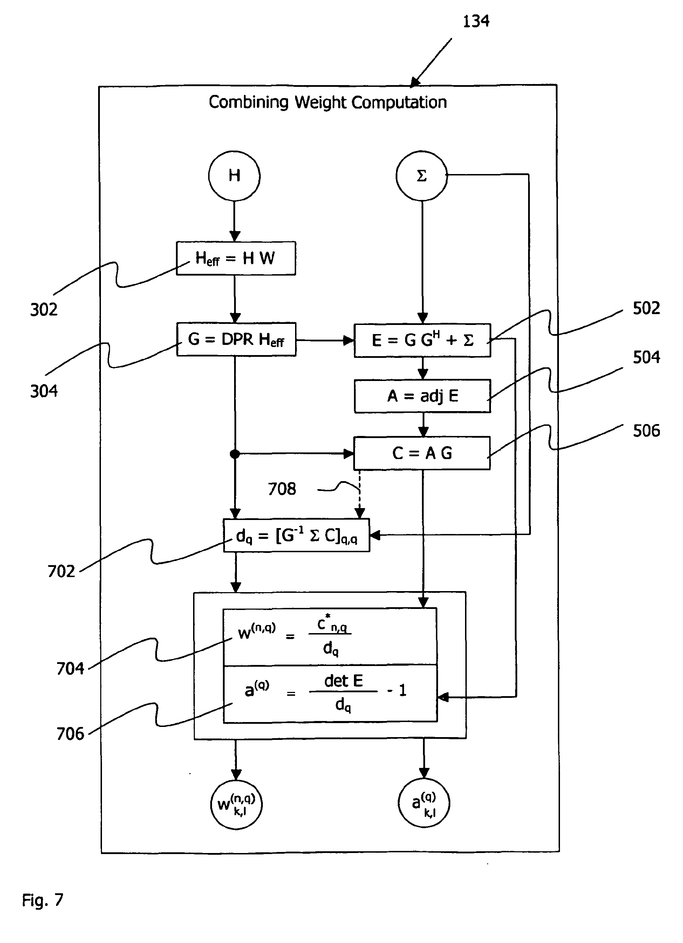

Fig. 7 shows another illustrative example of a combining weight computation unit 134 also sharing the components 302, 304, 502, 504, and 506. Component 702 computes denominators $d_q$ as the q-th diagonal elements of the matrix product $G^{-1} \Sigma C$ for arbitrary dimensionality q = 1, ..., Q≤N. While this example is capable of handling more than two codewords and receive antennas, and benefits from the elimination of the first division, the denominators dq should not be expected to be always representable as a sum of non-negative terms. The computation of the combining weight coefficients $w^{(n,q)}$ and gain coefficients $a^{(q)}$ in the components 704 and 706, respectively, parallels the computations of the components 604 and 606 except for the increased dimensionality.

In the embodiment (of Fig. 6), the denominators $d_q$ can be encoded directly as a function of the input signals. The denominators $d_q$ can be stored once and applied 2Q-times in the components 604, 606. In case only the combining weight coefficients $w^{(n,q)}$ are required, a computation of the determinant of the square matrix E is dispensable. In case only the gain coefficients $a^{(q)}$ are required, the intermediate weight matrix C and the component 506 are dispensable.

As has become apparent from the above description of an embodiment, the technique discussed herein has numerous advantages. For example, a computation of combining weight coefficients and/or gain coefficients requires fewer computational steps. Second, the number of division operations has been lowered. Moreover, the disclosure significantly improves numerical robustness and numerical accuracy. Fourth, the increase in numerical efficiency combined with an increase of numerical accuracy results in a reduction in hardware size and power consumption.

In the foregoing, principles, embodiments and various modes of implementing the technique disclosed herein have been exemplarily described. However, the present invention should not be construed as being limited to the particular principles, embodiments and modes discussed above. Rather, it will be appreciated that variations and modifications may be made by a person skilled in the art without departing from the scope of the present invention as defined in the following claims.

**Claims**

1. A method of determining combining weight coefficients (w) and gain coefficients (a) for combining channels of a multi-channel transmission based on a channel estimate matrix (G) representative of the multi-channel transmission, the method comprising

- providing a square matrix (E) having a quadratic dependence on the channel estimate matrix (G), wherein the square matrix (E) equals E = GG$^H$ + diag($\sigma_0^2$, $\sigma_1^2$), wherein GG$^H$ is the quadratic dependence on the channel estimate matrix (G) and $\sigma_n^2$ is a noise variance estimate of an n-th receive path, n = 0, 1;
- deriving an adjugate matrix (A) of the square matrix (E);
- determining combining weight coefficients (w) as a function of the channel estimate matrix (G) and the adjugate matrix (A) by determining an intermediate weight matrix (C) as a product of the adjugate matrix (A) and the channel estimate matrix (G),
wherein matrix elements of the adjugate matrix (A) and matrix elements of the intermediate weight matrix (C) are directly represented by hardware,
wherein the combining weight coefficient (w) of a q-th transmit stream equals

$$w^{(q)} = \frac{c_q^*}{d_q}$$

with columns (c) of the intermediate weight matrix (C) and q = 0, 1; and
- determining gain coefficients (a), for a quantization of soft-bits, as a function of the channel estimate matrix (G) and a determinant of the square matrix (E), wherein the gain coefficient (a) of a q-th transmit stream equals

$$a^{(q)} = \frac{\det E}{d_q} - 1,$$

wherein denominators ($d_q$) are determined according to

$$d_q = \left| g_{0,1-q} \right|^2 \sigma_1^{\;2} + \left| g_{1,1-q} \right|^2 \sigma_0^{\;2} + \sigma_0^{\;2} \sigma_1^{\;2}$$

in a common computation step (602) and prior to a simultaneous
- computation (604, 606) of the combining weight coefficients (w) and the gain coefficients (a).

2. The method of claim 1, wherein the multi-channel transmission involves a plurality of transmit streams, each transmit stream corresponding to one column of the channel estimate matrix (G) and one column of the intermediate weight matrix (C).

3. The method of claim 2, wherein the combining weight coefficient (w) and/or the gain coefficient (a) for one of the transmit streams is a function of the corresponding one column of the channel estimate matrix (G) and the corresponding one column of the intermediate weight matrix (C).

4. The method of any one of claims 1 to 3, wherein the multi-channel transmission is a rank-two transmission and the intermediate weight matrix (C) equals

$$C = A \cdot G = \begin{pmatrix} e_{11}g_{00} - e_{01}g_{10} & e_{11}g_{01} - e_{01}g_{11} \\ e_{00}g_{10} - e_{01}^{*}g_{00} & e_{00}g_{11} - e_{01}^{*}g_{01} \end{pmatrix} = \begin{pmatrix} c_{00} & c_{01} \\ c_{10} & c_{11} \end{pmatrix}$$

with coefficients (e) and (g) of the square matrix (E) and the channel estimate matrix (G), respectively.

5. A computer program product comprising program code portions for performing the steps of any one of the preceding claims when the computer program product is executed on one or more computing devices.

6. The computer program product of claim 5, stored on a computer readable recording medium.

7. A device (134) for determining combining weight coefficients (w) and gain coefficients (a) for combining channels of a multi-channel transmission based on a channel estimate matrix (G) representative of the multi-channel transmission, the device comprising

    - a memory unit adapted to at least temporarily store data representative of a square matrix (E) having a quadratic dependence on the channel estimate matrix (G), wherein the square matrix (E) equals $E = GG^H + \mathrm{diag}(\sigma_0^2, \sigma_1^2)$, wherein $GG^H$ is the quadratic dependence on the channel estimate matrix (G) and $\sigma_n^2$ is a noise variance estimate of an n-th receive path, n = 0, 1;
    - a processor adapted to derive an adjugate matrix (A) of the square matrix (E);
    - the processor being further adapted to determine combining weight coefficients (w) as a function of the channel estimate matrix (G) and the adjugate matrix (A) by determining an intermediate weight matrix (C) as a product of the adjugate matrix (A) and the channel estimate matrix (G),
    wherein matrix elements of the adjugate matrix (A) and matrix elements of the intermediate weight matrix (C) are directly represented by hardware,
    wherein the combining weight coefficient (w) of a q-th transmit stream equals

$$w^{(q)} = \frac{c_q^{*}}{d_q}$$

    with columns (c) of the intermediate weight matrix (C) and q = 0, 1; and
    - the processor being further adapted to determine gain coefficients (a), for a quantization of soft-bits, as a function of the channel estimate matrix (G) and a determinant of the square matrix (E), wherein the gain coefficient (a) of a q-th transmit stream equals

$$a^{(q)} = \frac{\det E}{d_q} - 1,$$

wherein denominators ($d_q$) are determined according to

$$d_q = \left| g_{0,1-q} \right|^2 \sigma_1^2 + \left| g_{1,1-q} \right|^2 \sigma_0^2 + \sigma_0^2 \sigma_1^2$$

in a common computation step (602) and prior to a simultaneous computation (604, 606) of the combining weight coefficients (w) and the gain coefficients (a).

**8.** A user terminal, comprising the device of claim 7.

**Patentansprüche**

**1.** Verfahren zum Bestimmen von Kombinationsgewichtungskoeffizienten (w) und Verstärkungskoeffizienten (a) zum Kombinieren von Kanälen einer Mehrkanalübertragung auf Grundlage einer Kanalschätzungsmatrix (G), welche die Mehrkanalübertragung darstellt, wobei das Verfahren umfasst

- Bereitstellen einer quadratischen Matrix (E), die eine quadratische Abhängigkeit von der Kanalschätzungsmatrix (G) aufweist, wobei die quadratische Matrix (E) gleich E = $GG^H$ + diag($\sigma_0^2$, $\sigma_1^2$) ist, wobei $GG^H$ die quadratische Abhängigkeit von der Kanalschätzungsmatrix (G) ist und $\sigma_n^2$ eine Schätzung der Rauschvarianz des n-ten Empfangspfads mit n = 0, 1 ist;
- Bestimmen einer adjunkten Matrix (A) zu der quadratischen Matrix (E);
- Bestimmen von Kombinationsgewichtungskoeffizienten (w) als eine Funktion der Kanalschätzungsmatrix (G) und der adjunkten Matrix (A) durch Bestimmen einer Zwischengewichtungsmatrix (C) als ein Produkt der adjunkten Matrix (A) und der Kanalschätzungsmatrix (G), wobei Matrixelemente der adjunkten Matrix (A) und Matrixelemente der Zwischengewichtungsmatrix (C) direkt mittels Hardware dargestellt werden, wobei der Kombinationsgewichtungskoeffzient (w) eines q-ten Übertragungsstroms gleich

$$w^{(q)} = \frac{c_q^*}{d_q}$$

ist mit Spalten (c) der Zwischengewichtungsmatrix (C) und q = 0, 1; und
- Bestimmen von Verstärkungskoeffizienten (a), für eine Quantisierung von Soft-Bits, als eine Funktion der Kanalschätzungsmatrix (G) und einer Determinanten der quadratischen Matrix (E), wobei der Verstärkungskoeffizient (a) eines q-ten Übertragungsstroms gleich

$$a^{(q)} = \frac{\det E}{d_q} - 1$$

ist, wobei Nenner (dq) bestimmt werden gemäß

$$d_q = \left| g_{0,1-q} \right|^2 \sigma_1^{\ 2} + \left| g_{1,1-q} \right|^2 \sigma_0^{\ 2} + \sigma_0^{\ 2} \sigma_1^{\ 2}$$

in einem gemeinsamen Berechnungsschritt (602) und vor einer zeitgleichen Berechnung (604, 606) der Kombinationsgewichtungskoeffizienten (w) und der Verstärkungskoeffizienten (a).

2. Verfahren nach Anspruch 1, wobei die Mehrkanalübertragung eine Vielzahl an Übertragungsströmen umfasst, wobei jeder Übertragungsstrom einer Spalte der Kanalschätzungsmatrix (g) und einer Spalte der Zwischenschätzungsmatrix (C) entspricht.

3. Verfahren nach Anspruch 2, wobei der Kombinationsgewichtungskoeffizient (w) und/oder der Verstärkungskoeffizient (a) für einen der Übertragungsströme eine Funktion der entsprechenden einen Spalte der Kanalschätzungsmatrix (G) und der entsprechenden einen Spalte der Zwischengewichtungsmatrix (C) ist.

4. Verfahren nach einem der Ansprüche 1 bis 3, wobei die Mehrkanalübertragung eine Übertragung vom Rang 2 und die Zwischengewichtungsmatrix (C) gleich

$$C = A \cdot G = \begin{pmatrix} e_{11} g_{00} - e_{01} g_{10} & e_{11} g_{01} - e_{01} g_{11} \\ e_{00} g_{10} - e_{01}^* g_{00} & e_{00} g_{11} - e_{01}^* g_{01} \end{pmatrix} = \begin{pmatrix} c_{00} & c_{01} \\ c_{10} & c_{11} \end{pmatrix}$$

ist mit Koeffizienten (e) und (g) der quadratischen Matrix (E) bzw. der Kanalschätzungsmatrix (G).

5. Computerprogrammprodukt umfassend Programmcodeabschnitte zum Ausführen der Schritte eines der vorhergehenden Ansprüche, wenn das Computerprogrammprodukt auf einem oder mehreren Computervorrichtungen ausgeführt wird.

6. Computerprogrammprodukt nach Anspruch 5, gespeichert auf einem computerlesbaren Aufzeichnungsmedium.

7. Vorrichtung (134) zum Bestimmen von Kombinationsgewichtungskoeffizienten (w) und Verstärkungskoeffizienten (a) zum Kombinieren von Kanälen einer Mehrkanalübertragung auf Grundlage einer Kanalschätzungsmatrix (G), welche die Mehrkanalübertragung darstellt, wobei die Vorrichtung umfasst

- eine Speichereinheit, die dazu ausgebildet ist, wenigstens temporär Daten zu speichern zur Darstellung einer quadratischen Matrix (E), die eine quadratische Abhängigkeit von der Kanalschätzungsmatrix (G) aufweist, wobei die quadratische Matrix (E), gleich $E = GG^H + \mathrm{diag}(\sigma_0^2, \sigma_1^2)$ ist, wobei $GG^H$ die quadratische Abhängigkeit von der Kanalschätzungsmatrix (G) ist und $\sigma_n^2$ eine Schätzung der Rauschvarianz des n-ten Empfangspfads mit n = 0, 1, ist;
- einen Prozessor, der dazu ausgebildet ist, eine adjunkte Matrix (A) zu der quadratischen Matrix (E) zu bestimmen;
- den Prozessor, der ferner dazu ausgebildet ist, Kombinationsgewichtungskoeffizienten (w) als eine Funktion der Kanalschätzungsmatrix (G) und der adjunkten Matrix (A) zu bestimmen durch Bestimmen einer Zwischengewichtungsmatrix (C) als ein Produkt der adjunkten Matrix (A) und der Kanalschätzungsmatrix (G), wobei Matrixelemente der adjunkten Matrix (A) und Matrixelemente der Zwischengewichtungsmatrix (C) direkt mittels Hardware dargestellt werden, wobei der Kombinationsgewichtungskoeffizient (w) eines q-ten Übertragungsstroms gleich

$$w^{(q)} = \frac{c_q^*}{d_q}$$

ist mit Spalten (c) der Zwischengewichtungsmatrix (C) und q = 0, 1; und

- den Prozessor, der ferner dazu ausgebildet ist, Verstärkungskoeffizienten (a), für eine Quantisierung von Soft-Bits, als eine Funktion der Kanalschätzungsmatrix (G) und einer Determinanten der quadratischen Matrix (E) zu bestimmen, wobei der Verstärkungskoeffizient (A) eines q-ten Übertragungsstroms gleich

$$a^{(q)} = \frac{\det E}{d_q} - 1$$

ist, wobei Nenner (dq) bestimmt werden gemäß

$$d_q = \left| g_{0,1-q} \right|^2 \sigma_1^{\ 2} + \left| g_{1,1-q} \right|^2 \sigma_0^{\ 2} + \sigma_0^{\ 2} \sigma_1^{\ 2}$$

in einem gemeinsamen Berechnungsschritt (602) und vor einer zeitgleichen Berechnung (604, 606) der Kombinationsgewichtungskoeffizienten (w) und der Verstärkungskoeffizienten (a).

8. Benutzerendgerät, umfassend die Vorrichtung nach Anspruch 7.

**Revendications**

1. Procédé de détermination de coefficients de poids (w) en combinaison et de coefficients de gain (a) pour combiner des canaux d'une transmission multicanal sur la base d'une matrice d'estimation de canaux (G) représentative de la transmission multicanal, le procédé comprenant

- la prévision d'une matrice carrée (E) ayant une dépendance quadratique à la matrice d'estimation de canaux (G), dans lequel la matrice carrée (E) est égale à E = GG$^H$ + diag($\sigma_0^2$, $\sigma_1^2$), dans laquelle GG$^H$ est la dépendance quadratique à la matrice d'estimation de canaux (G) et $\sigma_n^2$ est une estimation de variance de bruit d'une n$^{ème}$ voie de réception, n = 0, 1 ;
- la dérivation d'une matrice ajoutée (A) de la matrice carrée (E) ;
- la détermination de coefficients de poids (w) en combinaison comme une fonction de la matrice d'estimation de canaux (G) et de la matrice ajoutée (A) en déterminant une matrice de poids intermédiaire (C) comme un produit de la matrice ajoutée (A) et de la matrice d'estimation de canaux (G),
dans lequel des éléments de matrice de la matrice ajoutée (A) et des éléments de matrice de la matrice de poids intermédiaire (C) sont directement représentés par le matériel,
dans lequel le coefficient de poids en combinaison (w) d'un q$^{ème}$ flux de transmission est égal à

$$w^{(q)} = \frac{c_q^*}{d_q}$$

avec des colonnes (c) de la matrice de poids intermédiaire (C) et q = 0, 1 ; et
- la détermination de coefficients de gain (a), pour une quantification de bits logiques, comme une fonction de la matrice d'estimation de canaux (G) et d'un déterminant de la matrice carrée (E), dans lequel le coefficient de gain (a) d'un q$^{ème}$ flux de transmission est égal à

$$a^{(q)} = \frac{detE}{d_q} - 1,$$

dans laquelle des dénominateurs (dq) sont déterminés conformément à

$$d_q = \left|g_{0,1-q}\right|^2 \sigma_1^2 + \left|g_{1,1-q}\right|^2 \sigma_0^2 + \sigma_0^2 \sigma_1^2$$

dans une étape de calcul (602) commune et avant un calcul (604, 606) simultané des coefficients de poids (w) en combinaison et des coefficients de gain (a).

2. Procédé selon la revendication 1, dans lequel la transmission multicanal implique une pluralité de flux de transmission, chaque flux de transmission correspondant à une colonne de la matrice d'estimation de canaux (G) et une colonne de la matrice de poids intermédiaire (C).

3. Procédé selon la revendication 2, dans lequel le coefficient de poids (w) en combinaison et/ou le coefficient de gain (a) pour un des flux de transmission sont/est une fonction de la colonne correspondante de la matrice d'estimation de canaux (G) et de la colonne correspondante de la matrice de poids intermédiaire (C).

4. Procédé selon l'une quelconque des revendications 1 à 3, dans lequel la transmission multicanal est une transmission de rang deux et la matrice de poids intermédiaire (C) est égale à

$$C = A \cdot G = \begin{pmatrix} e_{11}g_{00} - e_{01}g_{10} & e_{11}g_{01} - e_{01}g_{11} \\ e_{00}g_{10} - e_{01}^* g_{00} & e_{00}g_{11} - e_{01}^* g_{01} \end{pmatrix} = \begin{pmatrix} c_{00} & c_{01} \\ c_{10} & c_{11} \end{pmatrix}$$

avec des coefficients (e) et (g) de la matrice carrée (E) et de la matrice d'estimation de canaux (G), respectivement.

5. Produit de programme informatique comprenant des parties de code de programme pour mettre en oeuvre les étapes selon l'une quelconque des revendications précédentes lorsque le produit de programme informatique est exécuté sur un ou plusieurs dispositifs informatiques.

6. Produit de programme informatique selon la revendication 5, stocké sur un support d'enregistrement lisible par un ordinateur.

7. Dispositif (134) pour déterminer des coefficients de poids (w) en combinaison et de coefficients de gain (a) pour combiner des canaux d'une transmission multicanal sur la base d'une matrice d'estimation de canaux (G) représentative de la transmission multicanal, le dispositif comprenant

- une unité de mémoire adaptée à stocker au moins temporairement des données représentatives d'une matrice carrée (E) ayant une dépendance quadratique à la matrice d'estimation de canaux (G), dans lequel la matrice carrée (E) est égale à E = $GG^H$ + diag($\sigma_0^2$, $\sigma_1^2$), dans laquelle $GG^H$ est la dépendance quadratique à la matrice d'estimation de canaux (G) et $\sigma_n^2$ est une estimation de variance de bruit d'une $n^{ème}$ voie de réception, n = 0, 1 ;
- un processeur adapté à dériver une matrice ajoutée (A) de la matrice carrée (E) ;
- le processeur étant en outre adapté à déterminer des coefficients de poids (w) en combinaison comme une fonction de la matrice d'estimation de canaux (G) et de la matrice ajoutée (A) en déterminant une matrice de poids intermédiaire (C) comme un produit de la matrice ajoutée (A) et de la matrice d'estimation de canaux (G), dans lequel des éléments de matrice de la matrice ajoutée (A) et des éléments de matrice de la matrice de poids intermédiaire (C) sont directement représentés par le matériel,
dans lequel le coefficient de poids en combinaison (w) d'un $q^{ème}$ flux de transmission est égal à

$$w^{(q)} = \frac{c_q^*}{d_q}$$

avec des colonnes (c) de la matrice de poids intermédiaire (C) et q = 0, 1 ; et
- le processeur étant en outre adapté à déterminer des coefficients de gain (a), pour une quantification de bits logiques, comme une fonction de la matrice d'estimation de canaux (G) et d'un déterminant de la matrice carrée (E), dans lequel le coefficient de gain (a) d'un $q^{ème}$ flux de transmission est égal à

$$a^{(q)} = \frac{detE}{d_q} - 1,$$

dans laquelle des dénominateurs ($d_q$) sont déterminés conformément à

$$d_q = \left|g_{0,1-q}\right|^2 \sigma_1^2 + \left|g_{1,1-q}\right|^2 \sigma_0^2 + \sigma_0^2 \sigma_1^2$$

dans une étape de calcul (602) commune et avant un calcul (604, 606) simultané des coefficients de poids (w) en combinaison et des coefficients de gain (a).

**8.** Terminal d'utilisateur, comprenant le dispositif selon la revendication 7.

Fig. 1

Fig. 2

134

## Combining Weight Computation

$H$

$\Sigma$

302      $H_{eff} = H\,W$

304      $G = DPR\ H_{eff}$

$E = E(G, \Sigma)$      306

308

$B = E^{-1}\,G$

$$w^{(n,q)} = \frac{b^{*}_{n,q}}{1 - b_q^{\,H}\,g_q}$$

310

$$a^{(q)} = \frac{b_q^{\,H}\,g_q}{1 - b_q^{\,H}\,g_q}$$

$w^{(n,q)}$          $a^{(q)}$

Fig. 3 (Prior Art)

20

400

Provide Square Matrix E having a quadratic
dependence on Channel Estimate Matrix G — 402

Derive Adjugate Matrix A of the Square Matrix E — 404

Determine Combining Weight Coefficients w
as a function of
the Channel Estimate Matrix G and
the Adjugate Matrix A — 406

Fig. 4

134

## Combining Weight Computation

$H$

$\Sigma$

302

$H_{eff} = H\,W$

304

$G = DPR\,H_{eff}$

$E = G\,G^H + \Sigma$ — 502

$A = adj\,E$ — 504

$C = A\,G$ — 506

$$w^{(n,q)} = \frac{c^{*}_{n,q}}{\det E - c_q^{\,H}\,g_q}$$

508

$$a^{(q)} = \frac{c_q^{\,H}\,g_q}{\det E - c_q^{\,H}\,g_q}$$

$w^{(n,q)}_{k,l}$

$a^{(q)}_{k,l}$

Fig. 5

134

Combining Weight Computation

H

Σ

$H_{eff} = H\ W$

302

$G = DPR\ H_{eff}$

304

$E = G\ G^H + \Sigma$

502

$A = adj\ E$

504

$C = A\ G$

506

$d_1 = |g_{12}|^2\ \sigma_2^2 + |g_{22}|^2\ \sigma_1^2 + \sigma_1^2\ \sigma_2^2$

$d_2 = |g_{21}|^2\ \sigma_1^2 + |g_{11}|^2\ \sigma_2^2 + \sigma_1^2\ \sigma_2^2$

602

$w^{(n,q)} = \dfrac{c^*_{n,q}}{d_q}$

604

$a^{(q)} = \dfrac{det\ E}{d_q} - 1$

606

$w^{(n,q)}_{k,l}$

$a^{(q)}_{k,l}$

Fig. 6

134

## Combining Weight Computation

$H$

$\Sigma$

302

$H_{eff} = H W$

304

$G = DPR\ H_{eff}$

502 — $E = G\ G^H + \Sigma$

504 — $A = adj\ E$

506 — $C = A\ G$

708

702

$d_q = [G^{-1}\ \Sigma\ C]_{q,q}$

704

$$w^{(n,q)} = \frac{c^*_{n,q}}{d_q}$$

706

$$a^{(q)} = \frac{\det E}{d_q} - 1$$

$w^{(n,q)}_{k,l}$

$a^{(q)}_{k,l}$

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050069023 A1
- US 20070076805 A1

- EP 2075969 A1

**Non-patent literature cited in the description**

- *IEEE Transactions on Wireless Communications,* vol. 4, 593-602

- **J. PENKETH et al.** Performance and implementation complexity of receiver algorithms for MIMO-OFDM based wireless LAN systems. *Personal, Indoor and Mobile Radio Communications, 15th IEEE International Symposium,* 2004, vol. 2, 1522-1526